# NEUE EUROPÄISCHE PATENTSCHRIFT

(11) **EP 2 250 055 B2**
(45) Veröffentlichungstag und Bekanntmachung des Hinweises auf die Entscheidung über den Einspruch: **19.07.2017**
(45) Hinweis auf die Patenterteilung: 20.07.2011
(21) Anmeldenummer: 08873183.1
(22) Anmeldetag: 11.12.2008
(51) Int. Cl.: B60T 7/10, B60T 8/88, B60T 13/74

(54) **STEUERUNG EINER ELEKTRISCH BETÄTIGBAREN FESTSTELLBREMSE BEI AUSFALL EINES GESCHWINDIGKEITSSIGNALS**
CONTROLLING AN ELECTRICALLY ACTUABLE PARKING BRAKE IN THE EVENT OF FAILURE OF A SPEED SIGNAL
COMMANDE D'UN FREIN DE STATIONNEMENT À ACTIONNEMENT ÉLECTRIQUE EN CAS DE PANNE D'UN SIGNAL DE VITESSE

(30) Priorität: 04.03.2008 DE 102008012387
(43) Veröffentlichungstag der Anmeldung: 17.11.2010
(73) Patentinhaber: Lucas Automotive GmbH, 56070 Koblenz (DE)
(72) Erfinder: KINDER, Ralf, 56337 Eitelborn (DE); MÜLLER, Andreas, 56070 Koblenz (DE)
(74) Vertreter: Röthinger, Rainer
(86) Internationale Anmeldenummer: PCT/EP2008/010542
(87) Internationale Veröffentlichungsnummer: WO 2009/109211

(56) Entgegenhaltungen:
- EP-B1- 1 053 149
- WO-A-2004/000618
- WO-A-2004/089711
- WO-A1-2004/089711
- DE-A1- 10 343 131
- DE-A1- 10 345 485
- DE-A1- 10 351 589
- DE-A1- 19 908 062
- DE-A1- 19 962 556
- US-B1- 6 406 102

## Beschreibung

### Technisches Gebiet

Die Erfindung betrifft allgemein Kraftfahrzeug-Bremsanlagen. Insbesondere betrifft die Erfindung eine Steuerung einer Feststellbremse bei Ausfall eines Geschwindigkeitssignals.

### Hintergrund

Moderne Kraftfahrzeuge verfügen über mehrere voneinander unabhängige Bremssysteme. Ein erstes Bremssystem ist üblicherweise als Betriebsbremse ausgelegt und kann Zusatzsysteme umfassen, die eine Fahrstabilität des Kraftfahrzeugs während einer Bremsung verbessern, beispielsweise ABS, ESP oder eine Antischlupfregelung. Ein zweites Bremssystem ist gewöhnlich primär für Feststellbremsungen, also das Halten des Kraftfahrzeugs im Stillstand, ausgelegt. Aus Sicherheitsgründen wird gefordert, dass eine Feststellbremse auch verwendbar sein muss, ein sich bewegendes Kraftfahrzeug zum Stillstand zu bringen, beispielsweise, wenn die Betriebsbremse ausgefallen oder nur eingeschränkt funktionsfähig ist. Darüber hinaus können elektrisch betätigbare Feststell-Bremssysteme einen Fahrer beim Anhalten oder Anfahren des Kraftfahrzeugs an einer Steigung oder an einem Gefälle unterstützen.

Um eine elektrisch betätigbare Feststellbremse auf unterschiedliche Weisen anzusteuern, je nach dem, ob das sich bewegende Kraftfahrzeug in einem "dynamischen Modus" der Feststellbremse abgebremst oder das stillstehende Kraftfahrzeug in einem "statischem Modus" der Feststellbremse im Stillstand gehalten werden soll, wird ein Signal verarbeitet, welches auf eine Geschwindigkeit des Kraftfahrzeugs hinweist. Auf Basis dieses Signals kann dann ein fahrergesteuertes Signal zum Öffnen bzw. Schließen der Feststellbremse situationsgerecht in eine passende Ansteuerung von Aktuatoren der Feststellbremse umgesetzt werden. Aus Gründen der Sicherheit wird gefordert, dass eine Feststellbremse auch bei Ausfall eines solchen Geschwindigkeitssignals noch verwendbar sein muss, das Kraftfahrzeug abzubremsen und im Stillstand zu halten.

Im europäischen Patent EP 1 610 991 B1 wird hierzu vorgeschlagen, eine elektrische Feststellbremse bei Ausfall des Geschwindigkeitssignals und Aktivierung durch einen Fahrer in einem ersten Schritt in einen teilgeschlossenen Zustand zu bringen. Nach Ablauf einer vorbestimmten Zeit wird die Feststellbremse dann in einem zweiten Schritt vom teilgeschlossenen Zustand sprunghaft in einen vollständig geschlossenen Zustand überführt. Der vorgeschlagenen Vorgehensweise liegt die Annahme zu Grunde, dass das Kraftfahrzeug, falls es sich während des ersten Schrittes in Bewegung befunden hat, vor dem zweiten Schritt zum Stillstand gekommen ist.

In einigen Situationen trifft diese Annahme jedoch nicht zu, beispielsweise bei einem Bremsen aus hoher Geschwindigkeit oder während einer längeren Gefällefahrt, und die Fahrstabilität des Kraftfahrzeugs kann durch das sprunghafte vollständige Schließen der Feststellbremse gefährdet sein. Wird die Feststellbremse des sich noch bewegenden Kraftfahrzeugs nämlich sprunghaft vollständig geschlossen, so ist es möglich, dass eines oder mehrere der Räder des Kraftfahrzeugs blockieren und dadurch eine Fahrstabilität des Kraftfahrzeugs beinträchtigt wird.

Der Erfindung liegt die Aufgabe zugrunde, bei einer Feststellbremsung die oben angegebenen Nachteile bei Ausfall eines Geschwindigkeitssignals zu beheben.

### Kurzer Abriss

Gemäß einem ersten Aspekt wird ein Verfahren zur Steuerung einer elektrisch betätigbaren Feststellbremse eines Kraftfahrzeugs bei Ausfall eines auf eine Geschwindigkeit des Kraftfahrzeugs hinweisenden ersten Signals bereit gestellt, welches die Schritte des kontinuierlichen Schließens der Feststellbremse, so lange ein auf einen Fahrerwunsch, die Feststellbremse zu schließen, hinweisendes zweites Signal erfasst wird, und des Öffnens der Feststellbremse, wenn ein Ausbleiben des zweiten Signals erfasst wird, sofern sich die Feststellbremse in einem teilweise geöffneten Zustand befindet, umfasst, dadurch gekennzeichnet, dass die Feststellbremse kontinuierlich geschlossen wird, so lange das zweite Signal erfasst wird und bis eine Schließkraft eine maximale Schließkraft erreicht, wobei die maximale Schließkraft einem vollständig geschlossenen Zustand der Feststellbremse entspricht; wobei
die Feststellbremse im vollständig geschlossenen Zustand gehalten wird, sofern sich die Feststellbremse bei Ausbleiben des zweiten Signals im vollständig geschlossenen Zustand befindet,
wobei die Feststellbremse in diesem vollständig geschlossenen Zustand gehalten wird, sobald sie den vollständig geschlossenen Zustand erreicht hat.

Das erste Signal kann beispielsweise ein Raddrehzahlsignal oder ein aus mehreren Raddrehzahlsignalen gebildetes Signal sein; alternativ oder zusätzlich hierzu kann das erste Signal beispielsweise auch auf Basis eines Signals eines Gyrators oder eines Navigationssystems gebildet werden. Das zweite Signal kann beispielweise ein elektrisches Signal sein, welches ein Fahrer des Kraftfahrzeugs mittels eines elektrischen Tasters oder Schalters erzeugt.

Das Verfahren kann ein vollständiges Öffnen der Feststellbremse umfassen, falls das zweite Signal während des Öffnens nicht (wieder) erfasst wird. Auf diese Weise kann der Fahrer, indem er das zweite Signal nicht erzeugt, die Feststellbremse wieder vollständig lösen, oder er kann das zweite Signal während des Lösens neu erzeugen und die Feststellbremse dadurch wieder schließen. Ein vom Fahrer in rascher Folge erzeugtes und nicht erzeugtes zweites Signal kann die Feststellbremse in einem zugeordneten Bereich eines Öffnungszustandes halten.

Das kontinuierliche Schließen umfasst keine die Fahrstabilität beeinträchtigenden Sprünge und kann ein fortlaufendes Schließen mit einer begrenzten Schließgeschwindigkeit umfassen. In einer Variante liegt die begrenzte Schließgeschwindigkeit unterhalb einer maximal durch die Steuerung erzielbaren Schließgeschwindigkeit. Das fortlaufende Schließen kann auch umfassen, einen teilweise geöffneten Zustand der Feststellbremse nicht über einen gewissen Zeitraum aufrecht zu erhalten, also keine Pause beim Schließvorgang einzulegen.

Die Schließgeschwindigkeit kann konstant sein. In diesem Fall kann ein lineares Schließen der Feststellbremse erfolgen. Der Schließgeschwindigkeitsverlauf kann sich aber z. B. auch linear ändern, beispielweise linear steigend oder linear fallend. In diesem Fall kann ein Schließen der Feststellbremse progressiv oder umgekehrt progressiv erfolgen. Eine Schließgeschwindigkeit kann beispielsweise in Form eines Verlaufs eines Schließwegs, einer Schließkraft oder eines Schließdrucks über eine Zeit ausgedrückt sein.

Das Verfahren kann ferner ein Halten der Feststellbremse in einem vollständig geschlossenen Zustand, sofern sich die Feststellbremse bei Ausbleiben des zweiten Signals im vollständig geschlossenen Zustand befindet, umfassen. Auf diese Weise kann die Feststellbremse in einen geschlossenen, verriegelten Zustand gebracht werden, in welchem sie beispielsweise ein stillstehendes Kraftfahrzeug gegen unbeabsichtigtes Wegrollen sichert.

Das Verfahren kann ferner ein Öffnen der in einem vollständig geschlossenen Zustand befindlichen Feststellbremse bei Vorliegen eines auf einen Fahrerwunsch, die Feststellbremse zu öffnen, hinweisenden dritten Signals umfassen. Dieses dritte Signal kann identisch mit dem zweiten Signal oder aus diesem abgeleitet sein.

Die Feststellbremse kann mehrere Gruppen von Aktuatoren umfassen, und das Schließen der Feststellbremse kann ein Erhöhen der Bremskraft der Aktuatoren wenigstens einer ersten Gruppe und ein Halten der Bremskraft der Aktuatoren wenigstens einer zweiten Gruppe umfassen. Dadurch kann bei Überschreiten eines Maximums einer µ-Schlupfkurve durch eines oder mehrere Räder, das Rad oder diejenigen Räder, deren Aktuatoren nicht weiter geschlossen wurden, weiterhin Seitenführungskräfte übertragen. Jede der Gruppen kann einen oder mehrere Aktuatoren umfassen. In einer Ausführungsform umfasst die erste Gruppe mehrere Aktuatoren, die einer Vorderachse der Kraftfahrzeugs zugeordnet sind und die zweite Gruppe mehrere Aktuatoren, die einer Hinterachse des Kraftfahrzeugs zugeordnet sind. In einer weiteren Ausführungsform umfasst jede Gruppe jeweils Aktuatoren, die einander diagonal gegenüber liegenden Rädern des Kraftfahrzeugs zugeordnet sind.

Befindet sich das Kraftfahrzeug in Bewegung, kann das Verfahren ferner ein Verbringen der Feststellbremse in einen teilgeschlossenen Zustand umfassen, wenn das zweite Signal erfasst wird, und ein Öffnen der Feststellbremse bei Abwesenheit des zweiten Signals. Der teilgeschlossene Zustand kann beispielsweise durch einen Schließweg, eine Schließzeit, eine Schließkraft oder einen Schließdruck definiert sein. Ist eine Bewegung des Fahrzeugs sicher erkannt, so kann auf diese Weise beispielsweise mittels der Feststellbremse eine vorbestimmte Bremskraft auf das Kraftfahrzeug ausgeübt werden, solange der Fahrer einen Taster gedrückt hält. Lässt er den Taster los, während sich das Kraftfahrzeug noch bewegt, so wird die Feststellbremse wieder gelöst.

Gemäß einem zweiten Aspekt wird ein Computerprogrammprodukt mit Programmcodemitteln zur Durchführung des oben beschriebenen Verfahrens zur Verfügung gestellt, wenn das Computerprogrammprodukt auf einer Verarbeitungseinheit läuft. Eine solche Verarbeitungseinheit kann ein Steuergerät an oder in dem Kraftfahrzeug sein. Die Verarbeitungseinheit kann auch weitere Funktionen des Kraftfahrzeugs steuern, beispielsweise Bremsfunktionen wie ABS, ESP oder eine Berganfahr-Hilfe.

Das Computerprogrammprodukt kann auf einem computerlesbaren Datenträger gespeichert sein. Beispielsweise kann das Computerprogrammprodukt auf einem beweglichen Datenträger, wie beispielsweise einer Diskette, einer Festplatte, einer CD, einer WORM oder einer DVD, oder auf einem festen Datenträger, wie beispielweise einem Halbleiterspeicher (etwa ein RAM, ROM, EPROM, EEPROM, NOVRAM oder Flash) gespeichert sein.

### Kurze Beschreibung der Zeichnungen

Weitere Merkmale und Vorzüge der Erfindung werden nun im Zusammenhang mit einem Ausführungsbeispiel und den beigefügten Zeichnungen beschrieben, in denen:
Fig. 1 einen schematischen Überblick über eine elektrisch betätigbare Feststellbremse eines Kraftfahrzeugs zeigt;
Fig. 2 eine schematische Darstellung einer Steuerungsvorrichtung nach Fig. 1 zeigt;
Fig. 3 ein schematisches Ablaufdiagramm eines Verfahrens zur Steuerung einer Feststellbremse nach Fig. 1 zeigt; und
Fign. 4 a und b unterschiedliche Verläufe von Öffnungszuständen einer Feststellbremse und fahrergesteuerten Signalen zeigt.

In den Figuren tragen übereinstimmende Elemente gleiche Bezugszeichen.

### Beschreibung eines bevorzugten Ausführungsbeispiels

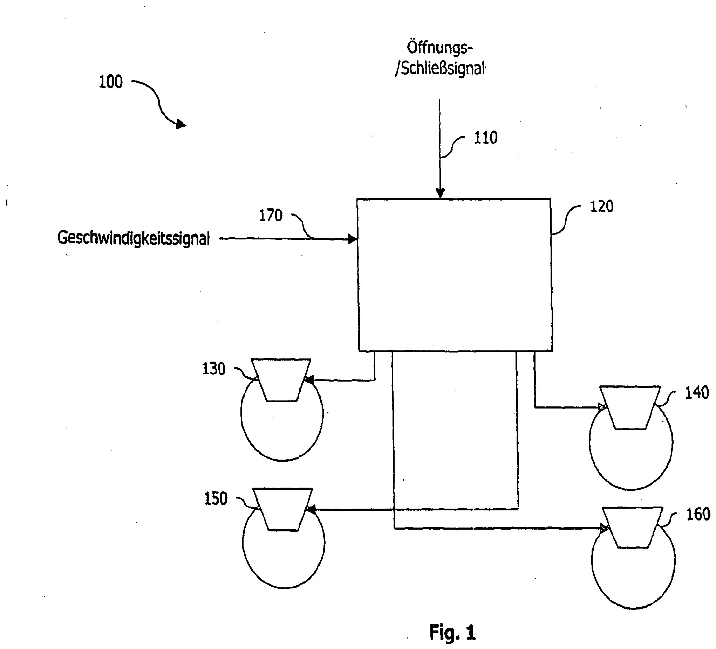

Fig. 1 zeigt ein Ausführungsbeispiel einer elektrisch betätigbaren Feststellbremse 100 eines Kraftfahrzeugs. Die Feststellbremse 100 umfasst eine Verarbeitungseinheit 120, die einen Eingang für ein Öffnungs-/ Schließsignal 110 besitzt und mit Aktuatoren 130, 140, 150 und 160 verbunden ist. Darüber hinaus besitzt die Verarbeitungseinheit 120 einen Eingang für ein Geschwindigkeitssignal 170. Das Öffnungs-/Schließsignal 110 wird durch einen Fahrerdes Kraftfahrzeugs erzeugt und signalisiert einen Fahrerwunsch, die Feststellbremse zu öffnen bzw. zu schließen.

In dem in Fig. 1 dargestellten Ausführungsbeispiel handelt es sich bei dem Kraftfahrzeug um einen Lastkraftwagen mit zwei Hinterachsen. Jeder der beiden Hinterachsen sind jeweils zwei Radbremsen zugeordnet, und jeder Radbremse ist wiederum einer der Aktuatoren 130 bis 160 zugeordnet. Jeweils zwei Aktuatoren bilden eine Aktuatorgruppe. Dabei können die beiden Aktuatoren einer Aktuatorgruppe derselben Hinterachse oder aber unterschiedlichen Hinterachsen zugeordnet sein.

Abweichend von dem beschriebenen Ausführungsbeispiel ist die hier beschriebene Lehre auch bei einem Kraftfahrzeug implementierbar, das lediglich eine Hinterachse aufweist. In einem solchen Fall wären dann zwei der Aktuatoren der Vorderachse und die anderen zwei Aktuatoren der Hinterachse zugeordnet. Gemäß einer weiteren Variante sind lediglich zwei Aktuatoren vorgesehen und der (z. B. einzigen) Hinterachse zugeordnet. Diese Variante entspricht dem üblichen Aufbau einer PKW-Feststellbremsanlage, die ausschließlich auf die Hinterachse wirkt.

Die Verarbeitungseinheit 120 ist ausgebildet, die in Fig. 1 dargestellten Aktuatoren 130 bis 160 gruppenweise zu öffnen, zu schließen oder in einem Zustand zu halten. Sie steuert die Aktuatoren 130 bis 160 in Abhängigkeit des Öffnungs-/Schließsignals 110 und eines Geschwindigkeitssignals 170. Liegt das Geschwindigkeitssignal 170 vor, so können ein Fahrzustand und ein Stillstand des Kraftfahrzeugs sicher erkannt werden. In Abhängigkeit des Öffnungs-/Schließslgnals 110 können dann die Aktuatoren 130 bis 160 entsprechend einem Abbremsen des Kraftfahrzeugs in einem dynamischen Modus der Feststellbremse 100 oder einem Halten des Kraftfahrzeugs im Stillstand in einem statischen Modus gesteuert werden.

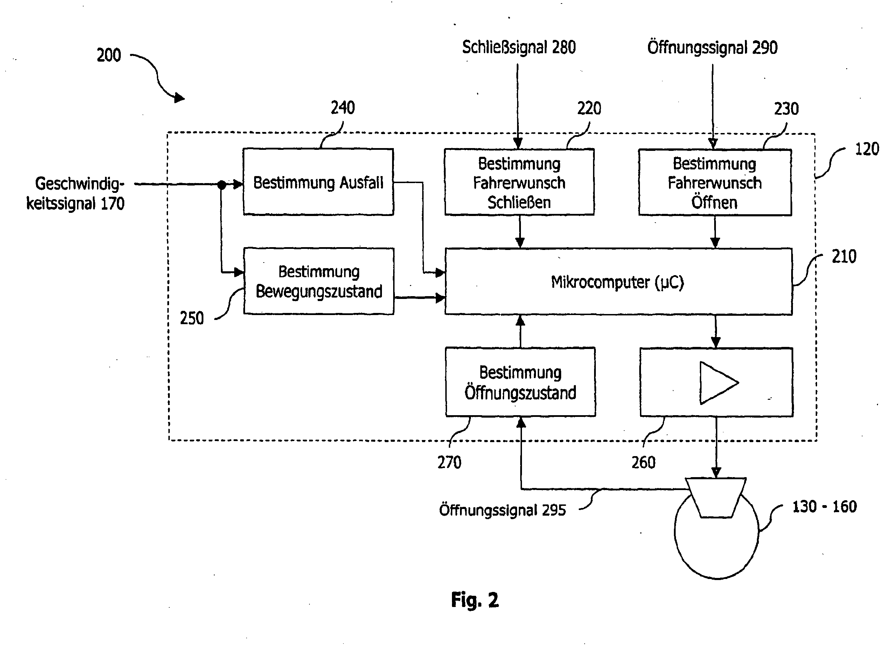

Fig. 2 zeigt in einer schematischen Darstellung eine Steuerungsvorrichtung 200 für die elektrisch betätigbare Feststellbremse 100 aus Fig. 1. Die Steuerungsvorrichtung 200 beinhaltet die in Fig. 1 gezeigte Verarbeitungseinheit 120. Die Verarbeitungseinheit 120 umfasst einen Mikrocomputer 210, der mit Bestimmungseinheiten 220, 230, 240, 250 und 270 sowie mit einer Ansteuereinrichtung 260 verbunden ist.

Die Bestimmungseinheit 220 ist ausgebildet, ein Schließsignal 280 zu erfassen und dem Mikrocomputer210 ein Vorliegen eines Fahrerwunsches, die Feststellbremse zu schließen, zu signalisieren. In entsprechender Weise erfasst die Bestimmungseinheit 230 ein Öffnungssignal 290 und signalisiert dem Mikrocomputer 210 ein Vorliegen eines Fahrerwunsches, die Feststellbremse zu öffnen. Jedes der Signals 280 und 290 kann mittels eines dedizierten Tasters oder Schalters (nicht gezeigt) erzeugt werden. Alternativ dazu können das Öffnungssignal 280 und das Schließsignal 290 kombiniert als Öffnungs-/Schließsignal 110 vorliegen. In diesem Fall kann das Öffnungs-/Schließsignal 110 beispielsweise durch einen einzigen Taster (nicht gezeigt) erzeugt werden. Ein Drücken des Tasters oder Schalters erzeugt dann (abwechselnd bzw. situationsbezogen) ein Öffnungs- oder Schließsignal. Die Bestimmungseinrichtungen 220 und 230 können in diesem Fall als eine integrierte Einheit ausgeführt sein.

In einer alternativen Ausführungsform kann zur Erzeugung der Signale 280 und 290 ein Drei-Stellungs-Schalter (nichtgezeigt) verwendet werden, der beispielsweise in einer ersten Stellung das Öffnungssignal (290), in einer zweiten Stellung gar kein Signal und in einer dritten Stellung das Schließsignal (290) erzeugt. Auf diese Weise können sich das Öffnungs- und das Schließsignal wechselseitig ausschließen.

Die Bestimmungseinheiten 240 und 250 sind ausgebildet, das Geschwindigkeitssignal 170 auszuwerten. Die Bestimmungseinheit 240 signalisiert dem Mikrocomputer 210 einen Ausfall des Geschwindigkeitssignals 170, während die Bestimmungseinheit 250 auf Basis des Geschwindigkeitssignals 170 (und eventuell weiterer, nicht gezeigter Signale) einen Bewegungszustand des Kraftfahrzeugs bestimmt und diesen dem Mikrocomputer 210 bereitstellt.

Der Mikrocomputer 210 steuert mittels der Ansteuereinrichtung 260 die Aktuatoren 130 - 160 derart an, dasssie geöffnet, geschlossen oder in ihrem Zustand gehalten werden. Der Übersichtlichkeit halber ist in Fig. 2 stellvertretend lediglich eine Ansteuereinrichtung 290 und einerderAktuatoren 130-160 dargestellt, es können jedoch mehrere Aktuatoren individuell oder in Gruppen angesteuert werden, wie oben mit Bezug auf Fig. 1 ausgeführt wurde. Die Ansteuereinrichtung 260 kann jeden der Aktuatoren 130-160 beispielsweise mittels Pulsweitenmodulation, Strom- oder Spannungssteuerung oder in einer anderen, bekannten Weise ansteuern.

Die Bestimmungseinrichtung 270 wertet ein Öffnungssignal 295 eines der Aktuatoren 130 bis 160 aus und signalisiert dem Mikrocomputer 210 einen Öffnungszustand des Aktuators. Das Öffnungssignal kann beispielsweise ein Drehsignal eines Elektromotors oder ein Zeit-, Wege-, Druck- oder Kraftsignal sein. In anderen Ausführungsformen kann die Bestimmungseinrichtung 280 den Öffnungszustand beispielsweise auch aus einem zeitlichen Verlauf eines Stromes oder einer Spannung bestimmen, wobei entsprechende Werte beispielsweise am Aktuator oder an der Ansteuereinrichtung 290 abgetastet werden können.

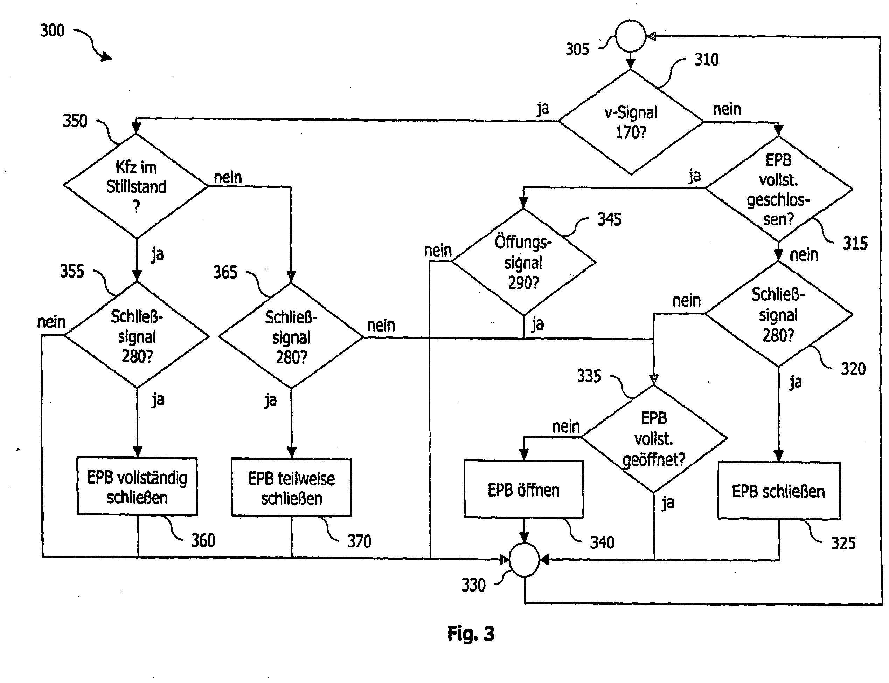

Fig. 3 zeigt ein schematisches Ablaufdiagramm 300 eines Verfahrens zur Steuerung der elektrisch betätigbaren Feststellbremse 100 nach Fig. 1. DerÜbersichtlichkeit halber wird stellvertretend nur die Steuerung des Aktuators 130 beschrieben.

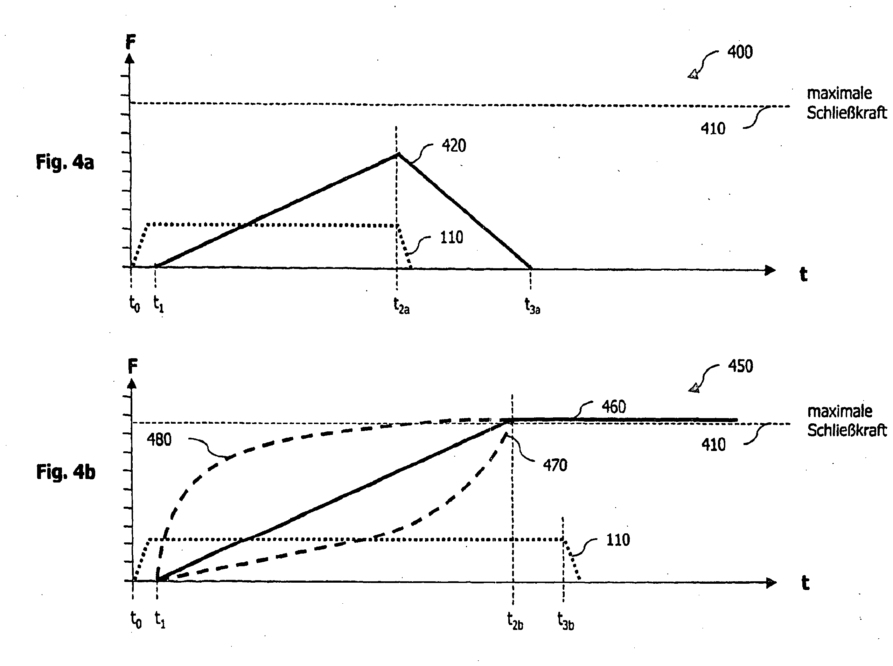

Ausgehend von einem Startzustand 305 wird in einem ersten Schritt 310 bestimmt, ob ein Geschwindigkeitssignal (v-Signal) 170 vorliegt oder nicht. Ein Nichtvorliegen des Geschwindigkeitssignals 170 kann auch dann bestimmt werden, wenn ein auf eine Geschwindigkeit des Kraftfahrzeugs hinweisendes Signal als nicht plausibel oder nicht definiert erkannt wird. Wird in Schritt 310 ein Nichtvorliegen des Geschwindigkeitssignals 170 bestimmt, so wird anschließend in einem Schritt 315 überprüft, ob der angesteuerte Aktuator 130 vollständig geschlossen ist. Ist dies nicht der Fall, wird in einem Schritt 320 geprüft, ob das Schließsignal 280 vorliegt oder nicht. Wie oben ausgeführt wurde, kann das Schließsignal 280 mit dem Öffnungssignal 290 identisch sein und als kombiniertes Öffnungs-/Schließsignal 110 vorliegen. Liegt das Schließsignal 280 vor, so wird der Aktuator 130 in einem nachfolgenden Schritt 325 kontinuierlich (also ohne die Fahrstabilität beeinträchtigende Bremskraft-Sprünge) geschlossen, solange das Schließsignal 280 erfasst wird. Dieser Vorgang wird weiter unten unter Bezugnahme auf die Fign. 4a und 4b genauer erläutert. Der dem Schritt 325 folgende Zustand 330 entspricht dem Zustand 305, so dass das Verfahren von Neuem durchgeführt werden kann.

Wird andererseits in Schritt 320 festgestellt, dass das Schließsignal 280 nicht vorliegt, so wird in einem Schritt 335 überprüft, ob der Aktuator 130 vollständig geöffnet ist. Ist dies der Fall, so befindet sich das Verfahren wieder im Zustand 330 (bzw. 305). Andernfalls wird der Aktuator 130 in einem Schritt 340 geöffnet.

Mittels der bisher beschriebenen Schritte 305 bis 340 kann das Kraftfahrzeug auch bei fehlendem Geschwindigkeitssignal 170 durch den Fahrer mittels der Feststellbremse 100 abgebremst werden, ohne einen instabilen Fahrzustand durch instantanes vollständiges Schließen der Feststellbremse 100zu riskieren. Der Fahrer kann trotzdem einen vollständig geschlossenen, verriegelten Zustand der Feststellbremse 100 zum Halten des Kraftfahrzeugs im Stillstand herbeiführen.

Wird in Schritt 315 festgestellt, dass die Feststellbremse 100 bereits vollständig geschlossen ist, so wird in einem Schritt 345 das Vorliegen des Öffnungssignals 290 geprüft. Liegt kein Öffnungssignal 290 vor, so geht das Verfahren in den Zustand 330 (bzw. 305) über. Andernfalls wird die Feststellbremse 100 zuerst in den Schritten 335 und 340, wie oben ausgeführt, geöffnet, falls sie noch nicht vollständig geöffnet ist, bevordas Verfahren den Zustand 330 (bzw. 305) einnimmt.

Die im Folgenden beschriebenen Schritte 350 bis 370 des Verfahrens 300 betreffen eine Steuerung der Feststellbremse 100 bei Vorliegen des Geschwindigkeitssignals 170.

Wird in Schritt 310 festgestellt, dass das Geschwindigkeitssignal 170 vorliegt, so wird anschließend in einem Schritt 350 abgefragt, ob sich das Kraftfahrzeug im Stillstand befindet. Steht das Kraftfahrzeug still, wird die Feststellbremse 100 in einem statischen Modus betrieben, in welchem zunächst in einem Schritt 355 bestimmt wird, ob ein Schließsignal 280 vorliegt Liegt das Schließsignal 280 vor, so wird die Feststellbremse 100 in einem Schritt 360 vollständig geschlossen und der statische Modus beendet, bevor sich das Verfahren wieder im Zustand 330 (bzw. 305) befindet. Wird in Schritt 355 festgestellt, dass kein Schließsignal 280 vorliegt, so geht das Verfahren in den Zustand 330 (bzw. 305) über. Es ist zu beachten, dass in Schritt 360 ein Schließen der Feststellbremse 100 nicht nur so lange erfolgt, wie das Schließsignal 280 vorliegt, sondern dass auch bei einem nur vorübergehenden Vorliegen des Schließsignals 280 die Feststellbremse 100 in Schritt 360 vollständig geschlossen wird.

Wird in Schritt 350 bestimmt, dass sich das Kraftfahrzeug nicht im Stillstand befindet, wird die Feststellbremse 100 in einem dynamischen Modus betrieben. In diesem wird zunächst in einem Schritt 365 analog zum Schritt 355 bestimmt, ob das Schließsignal 280 vorliegt. Uegt dieses vor, so wird in einem Schritt 360 die Feststellbremse 100 teilweise geschlossen(z.B. so lange, wie das Schließsignal 280 erfasst wird). Nach dem Schritt 370 wird der dynamische Modus beendet und das Verfahren geht in den Zustand 330 (bzw.305) über. Wird in Schritt 365 bestimmt, dass das Schließsignal 280 nicht (oder nicht mehr) vorliegt, so erfolgt ein Öffnen der Feststellbremse 100 in den Schritten 335 und 340, wie oben ausgeführt.

Die Figuren 4a und 4b zeigen unterschiedliche zeitliche Verläufe 400 und 450 der Schließkräfte der Feststellbremse 100 nach Fig. 1 und eines Öffnungs-/ Schließsignals 110 bei fehlendem Geschwindigkeitssignal 170. In beiden Figuren bezeichnen die horizontalen Achsen die Zeit, während die vertikalen Achsen eine Schließkraft F der Feststellbremse 100 als beispielhafte, einen Öffnungszustand der Feststellbremse 100 anzeigende Größe bezeichnen. Wie oben ausgeführt, könnte als Maß für einen Öffnungszustand der Feststellbremse 100 an Stelle der Schließkraft auch beispielsweise ein Schließweg oder ein hydraulischer Betätigungsdruck verwendet werden. Eine maximale Schließkraft 410, die einem vollständig geschlossenen Zustand der Feststellbremse 100 entspricht, ist in beiden Figuren 4a und 4b als horizontale, gestrichelte Linie eingezeichnet. Für das (z.B. binäre) Öffnungs-/Schließsignal 110 ist in vertikaler Richtung lediglich dessen Vorliegen angezeigt.

In Fig. 4a liegt ab dem Zeitpunkt t₀ das Öffnungs-/Schließsignal 110 vor. Nach einer kurzen Verzögerung wird ab dem Zeitpunkt t₁ als Antwort auf das Öffnungs-/Schließsignal 110 die Feststellbremse 100 kontinuierlich geschlossen und die Schließkraft 420 steigt an. Noch bevor die Schließkraft 420 die maximale Schließkraft 410 erreicht, fällt zu einem Zeitpunkt t₂ₐ das Öffnungs-/Schließsignal 110 wieder weg und die Feststellbremse 100 wird im Folgenden wieder geöffnet, wie sich an der abfallenden Schließkraft 420 zeigt. Zum Zeitpunkt t₃ₐ ist die Feststellbremse 100 vollständig geöffnet und die Schließkraft 420 ist wieder auf dem Wert Null.

In Fig. 4b ist ein anderer Verlauf einer Schließkraft 460 der Feststellbremse 100 gezeigt. Wie in Fig. 4a liegt das Öffnungs-/Schließsignal 110 ab dem Zeitpunkt t₀ vor, und ab dem Zeitpunkt t₁ folgt ein kontinuierliches Schließen der Feststellbremse 100, so dass die Schließkraft 460 kontinuierlich erhöht wird. Als zu einem Zeitpunkt t_{2b} die Schließkraft 460 die maximale Schließkraft 410 erreicht, liegt das Öffnungs-/Schließsignal 110 immer noch vor.

Zum Zeitpunkt t_{2b} ist die Feststellbremse 100 also vollständig geschlossen und wird im Folgenden auch bei späterem Wegfall des Öffnungs-/Schließsignals 110 im vollständig geschlossenen Zustand gehalten. Die Schließkraft 460 bleibt dabei knapp über der maximalen Schließkraft 410 konstant. Das leichte "Überschießen" der Schließkraft 460 über die maximale Schließkraft 410 kann beispielsweise durch ein Nachlaufen eines den Aktuator ansteuernden Elektromotors bedingt sein. Ab dem Zeitpunkt t_{3b} fällt das Öffnungs-/Schließsignal 110 wieder weg.

Die Schließkraft 460 bleibt im Unterschied zur Situation in Fig. 4a auch nach dem Zeitpunkt t_{3b} auf ihrem maximalen Wert, da die Feststellbremse, wenn sie einen vollständig geschlossenen Zustand erreicht hat, unabhängig vom ausbleibenden Öffnungs-/Schließsignal 110 nicht geöffnet wird.

Die zwischen den Zeitpunkten t₁ und t_{2b} in Fig. 4b eingezeichneten alternativen Verläufe 470 und 480 der Schließkraft stellen andere Varianten eines kontinuierlichen Schließens der Feststellbremse 100 dar. Der Verlauf 470 entspricht einem progressiven Schließen der Feststellbremse, was einer linear ansteigenden Schließgeschwindigkeit entspricht. Der Verlauf 480 stellt einen umgekehrt progressiven Verlauf der Schließkraft dar, was einer linear abfallenden Schließgeschwindigkeit entspricht. Die dem Verlauf 460 zugeordnete Schließgeschwindigkeit zwischen den Zeitpunkten t₁ und t_{2b} ist hingegen konstant. Ab dem Zeitpunkt t_{2b} sind die Verläufe 460, 470 und 480 miteinander identisch und es ist nur der Verlauf 460 eingezeichnet Entsprechende progressive und umgekehrt progressive Verläufe 470 und 480 sind auch in der in Fig. 4a dargestellten Situation möglich, aber nicht eingezeichnet.

In Fig. 4a ist anschaulich dargestellt, wie eine Bremskraft als Antwort auf das Öffnungs-/Schließsignal 110 kontinuierlich und ohne Bremskraftsprünge auf- und wieder abgebaut wird. Die Feststellbremse 100 verhält sich dadurch für den Fahrer vorhersagbarer und kontrollierbarer, und ein instabiler Fahrzustand kann vermieden werden.

In Fig. 4b ist gut zu erkennen, wie die Feststellbremse 100 in einen vollständig geschlossenen Zustand gebracht wird, ohne dass eine "Pause" eingelegt würde, wie es in der EP 1 610 991 B1 vorgeschlagen ist. Der Fahrer muss auf ein Verriegeln der Feststellbremse im vollständig geschlossenen Zustand also nicht warten, was das Risiko einer versehentlich nicht verriegelten Feststellbremse verringert.

## Patentansprüche

1. Verfahren (300) zur Steuerung einer elektrisch betätigbaren Feststellbremse (100) eines Kraftfahrzeugs bei Ausfall eines auf eine Geschwindigkeit des Kraftfahrzeugs hinweisenden ersten Signals (170), folgende Schritte umfassend:
- kontinuierliches Schließen (325) der Feststellbremse (100), so lange ein auf einen Fahrerwunsch, die Feststellbremse (100) zu schließen, hinweisendes zweites Signal (280) erfasst wird; und
- Öffnen (340) der Feststellbremse (100), wenn ein Ausbleiben des zweiten Signals (280) erfasst wird, sofern sich die Feststellbremse (100) in einem teilweise geöffneten Zustand befindet;
**dadurch gekennzeichnet, dass**
- die Feststellbremse (100) kontinuierlich geschlossen wird, so lange das zweite Signal erfasst wird und bis eine Schließkraft eine maximale Schließkraft erreicht, wobei die maximale Schließkraft einem vollständig geschlossenen Zustand der Feststellbremse (100) entspricht; wobei
- die Feststellbremse (100) im vollständig geschlossenen Zustand gehalten wird, sofern sich die Feststellbremse (100) bei Ausbleiben des zweiten Signals (280) im vollständig geschlossenen Zustand befindet, wobei die Feststellbremse (100) in diesem vollständig geschlossenen Zustand gehalten wird, sobald sie den vollständig geschlossenen Zustand erreicht hat.

2. Verfahren (300) nach Anspruch 1, ferner umfassend ein vollständiges Öffnen der Feststellbremse (100), falls das zweite Signal (280) während des Öffnens (340) nicht erfasst wird.

3. Verfahren (300) nach einem der Ansprüche 1 oder 2, **dadurch gekennzeichnet, dass** das kontinuierliche Schließen (325) ein fortlaufendes Schließen mit einer begrenzten Schließgeschwindigkeit umfasst.

4. Verfahren (300) nach Anspruch 3, **dadurch gekennzeichnet, dass** die Schließgeschwindigkeit im Wesentlichen konstant ist.

5. Verfahren (300) nach Anspruch 3, **dadurch gekennzeichnet, dass** sich die Schließgeschwindigkeit im Wesentlichen linear ändert.

6. Verfahren (300) nach einem der vorangehenden Ansprüche, ferner umfassend ein Öffnen (340) der in einem vollständig geschlossenen Zustand befindlichen Feststellbremse (100) bei Vorliegen eines auf einen Fahrerwunsch, die Feststellbremse zu öffnen, hinweisenden dritten Signals (290).

7. Verfahren (300) nach einem der vorangehenden Ansprüchen, wobei die Feststellbremse (100) mehrere Gruppen von Aktuatoren (130, 140, 150, 160) umfasst, **dadurch gekennzeichnet, dass** das Schließen (325) der Feststellbremse (100) ein Erhöhen der Bremskraft der Aktuatoren (130, 140, 150, 160) wenigstens einer ersten Gruppe und ein Halten der Bremskraft der Aktuatoren (130, 140, 150, 160) wenigstens einer zweiten Gruppe umfasst.

8. Computerprogrammprodukt mit Programmcodemitteln zur Durchführung eines Verfahrens nach einem der vorangegangenen Ansprüche, wenn das Computerprogrammprodukt auf einer Verarbeitungseinheit (120) läuft.

9. Computerprogrammprodukt nach dem vorigen Anspruch, wenn es auf einem computerlesbaren Datenträger gespeichert ist.

## Claims

1. A method (300) of controlling an electrically actuable parking brake (100) of a motor vehicle in the event of failure of a first signal (170) indicating a speed of the motor vehicle, comprising the following steps of:
- closing (325) continuously the parking brake (100) as long as a second signal (280) indicating a driver request to close the parking brake (100) is detected; and
- opening (340) the parking brake (100) if an absence of the second signal (280) is detected, provided that the parking brake (100) is in a partially open state;
**characterized in that**
- the parking brake (100) is continuously closed as long as the second signal is detected and until a closing force reaches a maximum closing force, wherein the maximum closing force corresponds to a fully closed state of the parking brake (100); wherein
- the parking brake (100) is maintained in the fully closed state, provided that the parking brake (100) in the absence of the second signal (280) is in the fully closed state, wherein the parking brake (100) is maintained in this fully closed state, as soon as it has reached the fully closed state.

2. The method (300) according to claim 1, further comprising fully opening the parking brake (100) if the second signal (280) is not detected during the opening (340).

3. The method (300) according to one of claims 1 or 2, **characterized in that** the continuous closing (325) comprises a continuous closing at a limited closing speed.

4. The method (300) according to claim 3, **characterized in that** the closing speed is substantially constant.

5. The method (300) according to claim 3, **characterized in that** the closing speed varies substantially linearly.

6. The method (300) according to any one of the preceding claims, further comprising opening (340) the parking brake (100) situated in a fully closed state if the presence of a third signal (290) indicating a driver request to open the parking brake is given.

7. The method (300) according to any one of the preceding claims, wherein the parking brake (100) comprises a plurality of groups of actuators (130, 140, 150, 160), **characterized in that** the closing (325) of the parking brake (100) comprises increasing the brake force of the actuators (130, 140, 150, 160) of at least a first group and maintaining the brake force of the actuators (130, 140, 150, 160) of at least a second group.

8. A computer program product having program code means for executing a method according to any one of the preceding claims when the computer program product is running at a processing module (120).

9. The computer program product according to the preceding claim, when it is stored on a computer-readable data carrier.

## Revendications

1. Technique de commande (300) d'un frein de stationnement (100) à actionnement électrique d'un véhicule automobile en cas de panne d'un premier signal (170) indicateur de la vitesse du véhicule automobile, comprenant les étapes suivantes :
- le serrage (325) permanent du frein de stationnement (100) aussi longtemps qu'est détecté un deuxième signal (280) indiquant que le conducteur souhaite serrer le frein de stationnement (100), et
- la libération (340) du frein de stationnement (100) en cas d'absence de détection du deuxième signal (280), dans la mesure où le frein de stationnement (100) se trouve dans un état partiellement desserré,
**caractérisée en ce que**
- le frein de stationnement (100) est serré en permanence aussi longtemps qu'est détecté le deuxième signal et jusqu'à ce qu'une force de serrage atteigne une force de serrage maximale, cette force de serrage maximale correspondant à un état entièrement serré du frein de stationnement (100), et
- le frein de stationnement (100) étant maintenu dans son état entièrement serré dans la mesure où le frein de stationnement (100) se trouve dans son état entièrement serré en cas d'absence du deuxième signal (280), le frein de stationnement (100) étant maintenu dans cet état entièrement serré dès qu'il a atteint l'état entièrement serré.

2. Technique de commande (300) selon la revendication 1, comprenant en outre une libération complète du frein de stationnement (100) en cas de non-détection du deuxième signal (280) pendant la libération (340) dudit frein.

3. Technique de commande (300) selon la revendication 1 ou 2, **caractérisée en ce que** le serrage permanent (325) comprend un serrage continu à une vitesse de serrage limitée.

4. Technique de commande (300) selon la revendication 3, **caractérisée en ce que** la fermeture de serrage est pour l'essentiel constante.

5. Technique de commande (300) selon la revendication 3, **caractérisée en ce que** la vitesse de serrage évolue pour l'essentiel de manière linéaire.

6. Technique de commande (300) selon l'une des revendications précédentes, comprenant en outre une libération (340) du frein de stationnement (100) se trouvant dans un état entièrement serré en présence d'un troisième signal (290) indiquant que le conducteur souhaite libérer le frein de stationnement (100).

7. Technique de commande (300) selon l'une des revendications précédentes, le frein de stationnement (100) comprenant plusieurs groupes d'actionneurs (130, 140, 150, 160), **caractérisée en ce que** le serrage (325) du frein de stationnement (100) comprend une augmentation de la force de freinage des actionneurs (130, 140, 150, 160) d'au moins un premier groupe et un maintien de la force de freinage des actionneurs (130, 140, 150 160) d'au moins un deuxième groupe.

8. Programme d'ordinateur contenant des moyens de code de programme pour la mise en oeuvre d'une technique selon l'une des revendications précédentes lorsque le programme d'ordinateur tourne sur une unité de traitement (120).

9. Programme d'ordinateur selon la revendication précédente lorsque ce programme est enregistré sur un support de données lisible par ordinateur.
